# EUROPÄISCHE PATENTANMELDUNG

(11) **EP 4 671 529 A1**
(43) Veröffentlichungstag der Anmeldung: **31.12.2025**
(21) Anmeldenummer: 24184437.2
(22) Anmeldetag: 25.06.2024
(51) Int. Cl.: F03D 1/06

(54) **ROTORBLATT UMFASSEND ELASTIKELEMENT, VERFAHREN UND WINDENERGIEANLAGE**

(71) Anmelder: Wobben Properties GmbH, 26607 Aurich (DE)
(72) Erfinder: Hoffrogge, Cornelius, 26607 Aurich (DE); Stemberg, Jochen, 26607 Aurich (DE); Rubner, Florian, 26607 Aurich (DE)
(74) Vertreter: Eisenführ Speiser

(57) **Zusammenfassung**

Die Erfindung betrifft ein Rotorblatt, ein Verfahren zur Verwendung eines Elastikelements zur Verringerung eines Zackengrundradius zwischen mindestens zwei Serrations eines Rotorblatts sowie eine Windenergieanlage. Es wird ein Rotorblatt für einer Windenergieanlage bereitgestellt, wobei das Rotorblatt von einer Rotorblattwurzel bis zu einer Rotorblattspitze in Rotorblattlängsrichtung eine Rotorblattlänge aufweist, von einer Rotorblattvorderkante zu einer Rotorblatthinterkante in Rotorblattprofiltiefenrichtung eine Rotorblattprofiltiefe aufweist, eine sich zwischen Rotorblattvorderkante und Rotorblatthinterkante auf spannende Saugseite und eine sich zwischen Rotorblattvorderkante und Rotorblatthinterkante aufspannende Druckseite aufweist, eine sich zwischen der Saugseite und der Druckseite in Rotorblattdickenrichtung aufspannende Rotorblattdicke aufweist und mehrere an der Rotorblatthinterkante angeordnete Serrations aufweist, wobei die Rotorblatthinterkante zwischen je zwei der mehreren Serrations einen ersten Zackengrundradius aufweist, wobei das Rotorblatt ferner umfasst: mindestens ein Elastikelement, wobei die mehreren Serrations aus einem ersten Material, insbesondere GFK, bestehen, das mindestens eine Elastikelement aus einem zweiten Material besteht, das mindestens eine Elastikelement ausgestaltet ist den ersten Zackengrundradius zwischen mindestens zwei der mehreren Serrations auf einen zweiten Zackengrundradius zu verringern und eine Steifigkeit des zweiten Materials geringer ist als eine Steifigkeit des ersten Materials.

## Beschreibung

Die Erfindung betritt ein Rotorblatt für eine Windenergieanlage, ein Verfahren zur Verwendung eines Elastikelements zur Verringerung eines Zackengrundradius zwischen mindestens zwei Serrations eines Rotorblatts und eine Windenergieanlage.

Windenergieanlagen sind bekannt. Sie bergen das Potential einer dezentralisierten Energieversorgung. Dies ist besonders angesichts des Klimawandels sowie einem Ausstieg aus fossilen Energieträgern sehr vielversprechend. Um eine möglichst dezentrale Energieversorgung mit erneuerbaren Energien wie Solarstrom und Windstrom zu erreichen, müssen neue Standorte für unter anderem Windenergieanlagen erschlossen werden. Diese neuen Standorte rücken dabei näher an Wohngebiete heran, woraus sich für den Betrieb von Windenergieanlagen neue Herausforderungen ergeben. Eine dieser Herausforderungen ist beispielsweise die Schallemission der Rotorblätter. Um nahe Anwohner an eine Windenergieanlage nicht übermäßig zu stören, ist es wünschenswert den emittierten Schall der Windenergieanlage im Betrieb möglichst stark zu reduzieren. Andererseits soll die Windenergieanlage im Betrieb eine möglichst maximale Leistung generieren. Somit entsteht ein Optimierungsproblem bezüglich emittiertem Schall und generierter Leistung der Windenergieanlage.

Hierfür sind bereits einige Maßnahmen bekannt, mit denen versucht wird die Schallemission einer Windenergieanlage im Betrieb, insbesondere der Rotorblätter zu reduzieren, ohne dass damit allzu hohe Leistungseinbußen einhergehen. Eine bekannte Methode ist das Anbringen von Hinterkantenelementen an ein oder mehrere Rotorblätter derWindenergieanlage. Insbesondere sind Serrations bekannt, die, angebracht an die Hinterkante eines Rotorblatts, zu einer zackenförmigen Kontur der Hinterkante führen. Die durch die Serrations generierten Wirbel sorgen für eine reduzierte Schallemission des Rotorblatts im Betrieb. Die bekannten Serrations und Methoden reduzieren den emittierten Schall des Rotorblatts. Vor diesem Hintergrund lag der Erfindung die Aufgabe zugrunde, bekannte Schallunterdrückung mit Serrations weiter zu optimieren.

Gemäß einem ersten Aspekt der Erfindung wird ein Rotorblatt für einer Windenergieanlage bereitgestellt, wobei das Rotorblatt von einer Rotorblattwurzel bis zu einer Rotorblattspitze in Rotorblattlängsrichtung eine Rotorblattlänge aufweist, von einer Rotorblattvorderkante zu einer Rotorblatthinterkante in Rotorblattprofiltiefenrichtung eine Rotorblattprofiltiefe aufweist, eine sich zwischen Rotorblattvorderkante und Rotorblatthinterkante aufspannende Saugseite und eine sich zwischen Rotorblattvorderkante und Rotorblatthinterkante aufspannende Druckseite aufweist, eine sich zwischen der Saugseite und der Druckseite in Rotorblattdickenrichtung aufspannende Rotorblattdicke aufweist und mehrere an der Rotorblatthinterkante angeordnete Serrations aufweist, wobei die Rotorblatthinterkante zwischen je zwei der mehreren Serrations einen ersten Zackengrundradius aufweist, wobei das Rotorblatt ferner umfasst: mindestens ein Elastikelement, wobei die mehreren Serrations aus einem ersten Material, insbesondere GFK, bestehen, das mindestens eine Elastikelement aus einem zweiten Material besteht, das mindestens eine Elastikelement ausgestaltet ist den ersten Zackengrundradius zwischen mindestens zwei der mehreren Serrations auf einen zweiten Zackengrundradius zu verringern und eine Steifigkeit des zweiten Materials geringer ist als eine Steifigkeit des ersten Materials.

Zwischen je zwei Serrations liegt ein Zackengrundradius vor, der aus strukturellen Aspekten der Serrations möglichst groß, insbesondere etwa 5 mm, ausgebildet sein sollte. Es ist eine Erkenntnis der Erfindung, dass dieser große Zackengrundradius die Schallreduktionseigenschaften der Serrations, auch Trailing-Edge-Serrations, TES, verschlechtert. Den Zackengrundradius einfach zu verringern ist jedoch aus struktureller Sicht nicht ratsam. Daher beruht die Erfindung auf der Erkenntnis, den aus struktureller Sicht notwendigen großen Zackengrundradius durch ein zusätzliches Element zu verringern und somit die Schallreduktionseigenschaften der Serrations bei gleichbleibender struktureller Beständigkeit zu verbessern.

Im Rahmen dieser Erfindung stellt eine Serrations vorzugsweise ein insbesondere dreieckig ausgestaltetes Hinterkantenelement dar, das angebracht an einem Rotorblatt, die Rotorblattprofiltiefe des Rotorblatts erhöht. Insbesondere werden mehrere Serrations nebeneinander an der Hinterkante eines Rotorblatts bevorzugt in einem äußeren Bereich des Rotorblatts, insbesondere einem Bereich ab etwa 50 % der Rotorblattlänge bis zur Rotorblattspitze, angebracht. Bei zweidimensionalen Serrations spannt sich die Fläche der Serrations an der Rotorblatthinterkante bevorzugt in Rotorblattprofiltiefenebene auf. Die Serrations können allerdings auch einen Winkel zur Rotorblattprofiltiefenebene aufweisen. In diesem Fall ist die Ebene der Serrations um eine durch die Rotorblatthinterkante definierte Drehachse von der Rotorblattprofiltiefenebene um einen Winkel gedreht. Neben zweidimensionalen Ausgestaltungen von Serrations betrifft die Erfindung auch dreidimensional ausgestaltete Serrations. Im Rahmen dieser Erfindung beschreibt dabei eine zweidimensionale Serration eine Serration, die in einer Ebene, beispielsweise dreieckig, ausgestaltet ist und dazu senkrecht eine Höhe aufweist, die geringer ist als eine Ausdehnung der Serration in eine Richtung der Ebene. Vereinfacht gesprochen ist eine zweidimensionale Serration bevorzugt eine Art geformte Platte. Eine dreidimensionale Serration stellt im Rahmen dieser Erfindung eine Serration mit Körper dar, die neben der Ausdehnung in obige Ebene auch eine charakteristische Ausdehnung senkrecht zu dieser Ebene aufweist. Diese charakteristische Ausdehnung ist bevorzugt eine aerodynamische Struktur ausgestaltet zur Generation von Wirbeln, die sich vorteilhaft auf die Schallemission des Rotorblatts auswirken.

Die Serrations bestehen aus einem ersten Material, insbesondere einem Faserverbundmaterial, beispielsweise glasfaserverstärktem Kunststoff, auch Glasfaserkunststoff, GFK, oder einem kohlenstofffaserverstärkter Kunststoff, auch carbonfaserverstärkter Kunststoff, CFK, oder einem anderen Kompositwerkstoff, das möglichst leicht aber auch möglichst robust ist, sodass die Serrations angebracht an einem Rotorblatt für das Rotorblatt eine möglichst geringe zusätzliche Belastung darstellen, jedoch möglichst robust gegenüber Abnutzung oder Beschädigung durch Starkwind oder andere Wetterereignisse sind.

Der Zackengrundradius ist in einer Ausdehnungsebene von mindestens zwei Serrations definiert, wobei die Serrations in der Ausdehnungsebene eine insbesondere dreieckige Ausdehnung aufweisen. Die Spitze einer Serration ist als der am weitesten von der Rotorblatthinterkante beabstandete Punkt der Serration definiert, in einem Zustand, in dem die Serration an der Rotorblatthinterkante angeordnet ist. In einer dreieckigen Ausgestaltung der Serration weist die Serration von dieser Spitze aus zwei Kanten auf, die zu beiden Seiten der Spitze in Richtung Rotorblatthinterkante führen. Sind zwei Serrations nebeneinander an der Rotorblatthinterkante angeordnet, so treffen sich zwei Kanten der Serrations an einem Punkt an der Rotorblatthinterkante, dem Zackengrund. Der Zackengrund ist aus strukturellen Aspekten mit einem Zackengrundradius ausgestaltet, also kreisförmig in einem Bereich von einer ersten Kante einer ersten Serrations bis zu einer zweiten Kante einer zweiten Serrations, die einen gemeinsamen Zackengrund aufweisen. Vereinfacht kann die Form des Zackengrunds als offener Kreis, beziehungsweise Ausrundung, bezeichnet werden.

Erfindungsgemäß umfasst das Rotorblatt mindestens ein Elastikelement, das angebracht an dem Rotorblatt einen ersten Zackengrundradius zwischen mindestens zwei Serrations auf einen zweiten Zackengrundradius reduziert. Wenn im Weiteren unspezifisch von einem Elastikelement, beziehungsweise das Elastikelement, die Rede ist, ist dies stets als mindestens ein Elastikelement, beziehungsweise das mindestens eine Elastikelement, zu verstehen. Bei der Reduzierung des Zackengrundradius füllt das mindestens eine Elastikelement einen Raum im Zackengrund mit erstem Zackengrundradius, also einen Teil des Zackengrunds, aus. Hierfür weist das Elastikelement zu dem Zackengrund geometrisch ähnliche Aussparungen auf, die den zweiten Zackengrundradius definieren. Als Zackengrund wird also der Bereich zwischen zwei Serrations an der Rotorblatthinterkante verstanden, der von Umgebungsluft ausgefüllt wird. Die Erfindung umfasst Ausführungsformen, in denen das Rotorblatt ein einziges Elastikelement umfasst und Ausführungsformen, in denen das Rotorblatt zwei oder mehr Elastikelemente umfasst. Das Elastikelement besteht aus einem zweiten Material, dessen Steifigkeit geringer ist als die Steifigkeit des ersten Materials, aus dem die Serrations bestehen. Die Steifigkeit ist dabei eine Größe der Technischen Mechanik. Sie beschreibt den Widerstand eines Körpers gegen eine durch äußere Belastung (eine Kraft oder ein Drehmoment) bewirkte elastische Verformung. Für das erste Material und das zweite Material ist die Steifigkeit insbesondere als Biegesteifigkeit zu verstehen. Es ist ebenfalls möglich die Steifigkeit über weitere Parameter wie beispielsweise ein E-Modul oder die Reiszähigkeit zu definieren. Die Steifigkeit von Serrations liegt beispielsweise zwischen 5.000 MPa für Serrations aus ultra weichem GFK und 100.000 MPa für Serrations aus unidirektionalen Kohlenfasern, typischerweise bei etwa 12.000 MPa. Das Elastikelement besteht bevorzugt aus einem flexiblen Material, sodass sich das Elastikelement entsprechend der Serrations an denen es an der Rotorblatthinterkante angeordnet ist, verformen kann. Das Anordnen des Elastikelements an der Rotorblatthinterkante umfasst insbesondere die Verwendung von Befestigungsmitteln wie Schrauben, Tacker und Kleber sowie ein Aufstecken des Elastikelements auf die Serrations und/oder die Rotorblatthinterkante. Insbesondere ist das Elastikelement austauschbar ausgestaltet, sodass es bei Bedarf, bevorzugt mit einfachen Mitteln, durch ein anderes Elastikelement ersetzt werden kann.

In einer Ausführungsform der Erfindung ist das Elastikelement derart ausgestaltet, dass das Elastikelement den Zackengrundradius zwischen mehreren der Serrations reduziert, also einen Bereich in zwei oder mehr Zackengründen ausfüllt und somit deren Zackengrundradius reduziert.

Durch die Reduzierung des Zackengrundradius durch das mindestens eine Elastikelement, weist das Rotorblatt, umfassend mindestens ein Elastikelement, eine verringerte Schallemission im Betrieb gegenüber einem Rotorblatt ohne Elastikelement auf, bei gleichbleibender struktureller Stabilität sowie ohne zusätzliche Leistungsreduktion. Somit wird die Schallreduktionseigenschaft von Hinterkantenkämmen, umfassend mehrere Serrations, durch kleinere Zackengrundradien verbessern. Gleichzeit wird die ursprüngliche Form mit größeren Radien im strukturell relevanten Serrationteil erhalten, so dass Kerbspannungen aufgrund der betriebsbedingten Schwenklasten minimiert werden und keine Beschädigungen im Zackengrundbereich verursachen.

Gemäß einer vorteilhaften Ausgestaltung der Erfindung beträgt die Steifigkeit des zweiten Materials höchstens 60 % der Steifigkeit des ersten Materials.

Die somit bereitgestellte Flexibilität des Elastikelements wirkt der Bildung von Kerben und Rissen entgegen. Gerade der Bereich im Zackengrund ist aufgrund von Kerbspannungen aufgrund betriebsbedingter Schwenklasten diesbezüglich besonders anfällig. Der große Zackengrundradius des ersten Materials stellt die strukturelle Stabilität sicher. Durch die niedrigere Steifigkeit des zweiten Materials wird eine Destabilisierung, die bei der Verwendung von Material mit höherer Steifigkeit, beispielsweise 100 % der Steifigkeit des ersten Materials oder mehr, auftritt, vermieden.

Gemäß einer weiteren vorteilhaften Ausgestaltung der Erfindung, beträgt der zweite Zackengrundradius maximal 80% des ersten Zackengrundradius und insbesondere höchstens 4 mm. Es ist eine Erkenntnis der Erfindung, dass die Schallreduktionseigenschaften der Serrations mit abnehmendem Zackengrundradius zunehmen. Andererseits wird durch einen großen Zackengrundradius, beispielsweise 5 mm, die strukturelle Stabilität der Serration sichergestellt. Es ist somit vorteilhaft, den zweiten Zackengrundradius auf maximal 80 % des ersten Zackengrundradius zu beschränken, in obigem Beispiel 4 mm. Besonders bevorzugt ist der zweite Zackengrundradius noch kleiner. Beispielsweise sind Zackengrundradien bis zu 1 mm möglich und besonders erstrebenswert. Der Wert von 1 mm wird zum jetzigen Stand durch technische Limits der Fertigungsmethode der Serrations, beispielsweise per Wasserstrahlschnitt, beschränkt. In Zukunft sind jedoch mit alternativen Fertigungsmethoden noch kleinere zweite Zackengrundradien denkbar.

Gemäß einer weiteren vorteilhaften Ausgestaltung der Erfindung ist das mindestens eine Elastikelement an der Saugseite und/oder der Druckseite an mindestens zwei der Serrations angebracht. An mindestens zwei der Serrations angebracht bedeutet dabei insbesondere, dass das Elastikelement in einem Bereich der zwei Serrations angebracht ist, bevorzugt in direktem Kontakt mit den zwei Serrations steht. Je nach Ausführungsform der Erfindung ist es dabei möglich, dass das Elastikelement auf nur einer von Saugseite und Druckseite an den zwei Serrations angebracht ist oder auch an beiden von Saugseite und Druckseite.

Gemäß einer weiteren vorteilhaften Ausgestaltung der Erfindung, überlagert das mindestens eine Elastikelement zumindest einen Teil von mindestens zwei der mehreren Serrations. Dies ist insbesondere der Fall in einer Ausführungsform, in der das Elastikelement auf zumindest Teile der zwei Serrations aufgesteckt und/oder aufgeklebt ist. Bevorzugt überlagert das Elastikelement in dieser Ausführungsform zumindest Teile der Kanten der zwei Serrations, die zu dem Zackengrund führen, in dem das Elastikelement angeordnet ist und einen Teil des Zackengrunds ausfüllt. Ein Vorteil dieser Ausgestaltung der Erfindung liegt in einer einfachen aber robusten Befestigung des Elastikelements an dem Rotorblatt. In Ausführungsformen dieser Ausgestaltung ist das Elastikelement nachträglich an dem Rotorblatt angebracht, wobei das Rotorblatt bereits vor Anbringung des Elastikelements in Betrieb war.

Gemäß einer weiteren vorteilhaften Ausgestaltung der Erfindung, überlagert das mindestens eine Elastikelement zumindest einen Teil der Rotorblatthinterkante. Dies ist insbesondere der Fall in einer Ausführungsform, in der das Elastikelement auf zumindest einen Teil der Rotorblatthinterkante aufgesteckt, aufgeklebt oder aufgetackert, angeschraubt oder ähnliches ist. Ein Vorteil dieser Ausgestaltung der Erfindung liegt in einer einfachen aber robusten Befestigung des Elastikelements an dem Rotorblatt. Ein Vorteil dieser Ausgestaltung der Erfindung liegt in einer einfachen aber robusten Befestigung des Elastikelements an dem Rotorblatt. In Ausführungsformen dieser Ausgestaltung ist das Elastikelement nachträglich an dem Rotorblatt angebracht, wobei das Rotorblatt bereits vor Anbringung des Elastikelements in Betrieb war.

Gemäß einer bevorzugten Variante der obigen Ausgestaltung, ist das mindestens eine Elastikelement pfeilförmig ausgestaltet, derart, dass eine Pfeilspitze der Pfeilform des mindestens einen Elastikelements in Rotorblattprofiltiefenrichtung in Richtung Rotorblattvorderkante zeigt. Insbesondere überlagert dabei zumindest ein Teil der Pfeilform des Elastikelements die Rotorblatthinterkante. Die Pfeilform des Elastikelements erzeugt auf der Oberfläche des Rotorblatts Strömungsumlenkungen und richtet Mikroverwirbelungen gerade, bevor diese die Rotorblatthinterkante erreichen. Die Ausrichtung der Pfeilspitze in Richtung Rotorblattvorderkante ermöglicht dabei eine möglichst gleichanteilige Umlenkung der Strömung in Richtung der Serrations links und rechts neben dem Elastikelement in Richtung der Pfeilspitze gesehen. Der Pfeilform des Elastikelements wird also ein Finlet-Effekt zu Teil. Bevorzugt ist das Elastikelement in Pfeilform derart ausgestaltet und angebracht, dass die Pfeilspitze auf der Oberfläche des Rotorblatts in Rotorblattprofiltiefenrichtung vor der Rotorblatthinterkante mit einem Abstand zur Rotorblatthinterkante angeordnet ist. Ziel der Strömungsumlenkungen ist dabei die Abschwächung der Umströmung des Zackengrunds, was in einer reduzierten Schallemission des Rotorblatts resultiert.

Gemäß einer weiteren vorteilhaften Ausgestaltung der Erfindung, umfasst das mindestens eine Elastikelement mindestens einen sich parallel zur Rotorblattprofiltiefenrichtung von der Rotorblatthinterkante aus erstreckenden Abschnitt, der zwischen mindestens zwei der mehreren Serrations angeordnet ist. Der Abstand zwischen einem am weitesten von der Rotorblatthinterkante beabstandeten Punkts des Elastikelements und der Rotorblatthinterkante wird dabei als Länge des Elastikelements definiert. In einer Ausführungsform, in der die Serrations mit einem Winkel zur Rotorblattprofiltiefenrichtung an der Rotorblatthinterkante angeordnet sind, ist das Elastikelement bevorzugt derart ausgestaltet, dass sich der von der Rotorblatthinterkante erstreckende Abschnitt mit einem gleichen Winkel zur Profiltiefenrichtung von der Rotorblatthinterkante aus erstreckt wie die Serrations.

In dieser Ausgestaltung ist der zweite Zackengrundradius insbesondere null. Der sich von der Rotorblatthinterkante erstreckende Abschnitt des Elastikelements umfasst bevorzugt eine Fläche in einer Ebene, in der die Serrations, zumindest die Serrations an denen das Elastikelement angebracht ist, eine maximale Ausdehnung aufweisen. Die Länge des Elastikelements ist bevorzugt geringer als die Länge der Serrations, an denen das Elastikelement angeordnet ist. Die Fläche des Elastikelements in der Ebene der Serrations stellt eine aerodynamische Verlängerung der Oberfläche des Rotorblatts über die Rotorblatthinterkante hinaus dar, und wirkt sich positiv, also reduzierend, auf die Schallemission des Rotorblatts aus.

Gemäß einer bevorzugten Variante der obigen Ausgestaltung, weist der mindestens eine Abschnitt eine Ausdehnung in Rotorblattdickenrichtung auf, die größer ist als eine Ausdehnung der Serrations in Rotorblattdickenrichtung. In dieser Variante weist der sich von der Rotorblatthinterkante erstreckende Abschnitt des Elastikelements insbesondere eine aerodynamische Ausdehnung in Rotorblattdickenrichtung auf, die mit einer dreidimensionalen Serration zu vergleichen ist. In dieser Variante weist die Ausdehnung des sich von der Rotorblatthinterkante erstreckenden Abschnitts des Elastikelements in Rotorblattdickenrichtung bevorzugt aerodynamische Strukturen auf, die über eine bloße Dicke einer Platte, wie es bei einer zweidimensionalen Serration der Fall wäre hinausgehen. Ein solches Elastikelement wird im Folgenden auch dreidimensionales Elastikelement genannt.

Ist das Elastikelement mit einem Winkel zur Rotorblattprofiltiefenrichtung an der Rotorblatthinterkante angeordnet, so bezieht sich die Ausdehnung auf eine Ausdehnung des Elastikelements in eine Richtung, die diesen Winkel zur Rotorblattdickenrichtung entsprechend aufweist. Dies gilt auch für andere Ausgestaltungen und Varianten der Erfindung, die sich auf eine Rotorblattdickenrichtung beziehen.

Gemäß einer weiteren bevorzugten Variante der obigen Ausgestaltung, weist der mindestens eine Abschnitt eine Länge als maximale Ausdehnung von der Rotorblatthinterkante in Rotorblattprofiltiefenrichtung auf, die geringer ist als eine Länge als maximale Ausdehnung der Serrations von der Rotorblatthinterkante in Rotorblattprofiltiefenrichtung.

Gemäß einer weiteren bevorzugten Variante der obigen Ausgestaltung, weist der mindestens eine Abschnitt im Wesentlichen orthogonal zur Rotorblattprofiltiefenrichtung einen Querschnitt auf und der Querschnitt weist mindestens ein lokales Minimum einer Ausdehnung des mindestens einen Abschnitts in Rotorblattdickenrichtung auf, wobei die Ausdehnung des mindestens einen Abschnitts in Rotorblattdickenrichtung in dem Querschnitt beiderseitig des lokalen Minimums einen größeren Wert aufweist.

Ein lokales Minimum der Ausdehnung des Abschnitts in Rotorblattdickenrichtung ist dabei zu verstehen als ein Punkt des Querschnitts, welcher eine Ausdehnung in einer Richtung senkrecht zur Rotorblattprofiltiefenrichtung, aufweist, die kleiner ist als die Ausdehnung beiderseitig des lokalen Minimums. Beiderseitig des lokalen Minimums bezieht sich auf die zwei Punkte welche im Querschnitt direkt neben dem lokalen Minimum liegen, wobei die Punkte, welche dieselbe Ausdehnung aufweisen als die des lokalen Minimums, nicht berücksichtigt werden und in diesem Fall der nächste Punkt berücksichtigt wird, welcher eine Ausdehnung aufweist, die nicht gleich der des lokalen Minimums ist. Diese Ausdehnung kann auch als Elastikelementdicke bezeichnet werden.

Durch eine solche dreidimensionale Ausgestaltung wird die Abströmcharakteristik des Rotorblatts weiter verbessert. Dies führt zu einer diffuseren Abstrahlung von Schallemissionen, was sich positiv, also reduzierend auf die Schallemission des Rotorblatts im Betrieb auswirkt.

Die Erfindung umfasst für diese dreidimensionale Ausgestaltung des Elastikelements noch weitere vorteilhafte Ausgestaltungen.

Beispielsweise weist in einer dieser Ausgestaltungen das Elastikelement mehrere Querschnitte an unterschiedlichen Positionen in einer Richtung parallel zur Profiltiefenrichtung auf, wobei jeder der mehreren Querschnitte jeweils mindestens ein lokales Minimum der Elastikelementdicke aufweist, die auf einer Linie liegen, wobei die Verbindung aller lokalen Minima die auf einer Linie liegen als Rille bezeichnet wird, und wobei jeder der mehreren Querschnitte jeweils mindestens ein lokales Maximum der Elastikelementdicke aufweist, die auf einer Linie liegen, wobei die Verbindung aller lokalen Maxima, die auf einer Linie liegen, als Gratlinie bezeichnet wird.

Diese Rillen und Gratlinien wirken sich weiter positiv auf die Abströmcharakteristik des Rotorblatts aus.

Gemäß einer weiteren bevorzugten Variante der obigen Ausgestaltung, ist der mindestens eine Abschnitt spitzer oder stumpfer ausgestaltet als die Serrations. In dieser Variante wird bevorzugt der Winkel betrachtet, in dem zwei Kanten des Elastikelements, die zu einer Spitze des Elastikelements, das bevorzugt ab der Rotorblatthinterkante pfeilspitzförmig ausgestaltet ist, verlaufen, an der Spitze des Elastikelements zusammenlaufen. Dieser Winkel wird bevorzugt in einer Ebene angenommen, in derdie Rotorblattprofiltiefenrichtung liegt, oder, falls die Elastikelemente mit einem Winkel zur Rotorblattprofiltiefenrichtung angeordnet sind, eine Ebene, in der das Elastikelement eine maximale Ausdehnung aufweist. Für einen solchen Winkel sowie andere analoge Winkel, die sich auf eine Abweichung von einer durch das Rotorblatt vordefinierte Richtung beziehen, gilt im Rahmen der Erfindung, dass diese Winkel einen Wert größer 0° aufweisen. Für die Serrations wird ebenfalls ein Winkel angenommen, in dem zwei Kanten der Serration zu einer Spitze der Serration zusammenlaufen in einer Ebene der Rotorblattprofiltiefenrichtung und/oder der maximalen Ausdehnung der Serration. Die Spitze des Elastikelements und der Serrations ist dabei bevorzugt der am weitesten von der Rotorblatthinterkante beabstandetste Punkt des Elastikelements, beziehungsweise der Serration.

Ist der Abschnitt des Elastikelements stumpfer ausgestaltet als die Serrations, ist dieser Winkel größer als der Winkel der Serrations. Ist der Abschnitt des Elastikelements spitzer ausgestaltet als die Serrations, ist dieser Winkel kleiner als der Winkel der Serrations.

Anhand der Variation dieser Ausgestaltung des Abschnitts des Elastikelements, der sich von der Rotorblatthinterkante erstreckt, werden die aerodynamischen Eigenschaften des Elastikelements an das entsprechende Rotorblatt und/oder an Anforderungen an das Rotorblatt angepasst und vorzugsweise optimiert.

Gemäß einer weiteren vorteilhaften Ausgestaltung der Erfindung ist das mindestens eine Elastikelement in die Rotorblatthinterkante und insbesondere in die Serrations eingelegt, derart, dass die Rotorblattdicke der Rotorblatthinterkante in einem Zustand umfassend das Elastikelement gleich der Rotorblattdicke der Rotorblatthinterkante in einem Zustand ohne das mindestens eine Elastikelement ist. Die Rotorblatthinterkante und insbesondere die Serrations weisen bevorzugt eine Nut oder eine Aussparung auf, in die das Elastikelement eingelegt wird. Neben den bereits aufgezählten Befestigungsmethoden ist in dieser Ausgestaltung ein Einlaminieren des Elastikelements in der Rotorblatthinterkante und insbesondere der Serrations besonders bevorzugt.

In einer Ausführungsform dieser Ausgestaltung ist die Rotorblatthinterkante und insbesondere zumindest Teile der Serrations zweiteilig ausgestaltet. Zumindest einer, insbesondere beide der Teile der Rotorblatthinterkante und insbesondere der Serrations weisen dabei eine Nut oder Aussparung zur Aufnahme des Elastikelements auf, derart, dass das Elastikelement zwischen beiden Teilen in die Rotorblatthinterkante und insbesondere die Serrations aufgenommen wird. Vereinfacht kann dies auch als Sandwichausführung beschrieben werden.

Für das Merkmal, dass die Rotorblattdicke der Rotorblatthinterkante in einem Zustand umfassend das Elastikelement gleich der Rotorblattdicke der Rotorblatthinterkante in einem Zustand ohne das mindestens eine Elastikelement ist, wird ein stetiger Verlauf der Rotorblattdicke angenommen. In einer Ausführung, in der die Rotorblatthinterkante und insbesondere die Serrations auf einer der Druck- oder Saugseite eine Aussparung zur Aufnahme des Elastikelements aufweist ist dieses Merkmal derart zu verstehen, dass die Rotorblattdicke der Rotorblatthinterkante in einem Zustand ohne Aussparung und ohne Elastikelement gleich der Rotorblattdicke der Rotorblatthinterkante in einem Zustand mit Aussparung und mit in der Aussparung angeordnetem Elastikelement ist.

Dies begünstigt die Aerodynamik des Rotorblatts, da ein stetiger Verlauf der Rotorblattdicke vorliegt, was sich wiederum positiv auf die Schallemission des Rotorblatts auswirkt.

Gemäß einer weiteren vorteilhaften Ausgestaltung der Erfindung, ist das mindestens eine Elastikelement ausgestaltet, einen Winkel zwischen einer Kante eines Zwischenraums zwischen zwei der Serrations und der Rotorblatthinterkante zu verringern. Der Winkel ist hierbei von der Kante des Zwischenraums zwischen zwei der Serrations in Richtung einer Spitze der Serrations anzunehmen, zu der die Kante des Zwischenraums verläuft. Der Winkel kann beispielsweise vom Zackengrund aus gemessen werden und ist insbesondere kleiner 90°. Die Kante des Zwischenraums zwischen zwei der Serrations ist insbesondere eine Kante einer der Serrations, gerade in einer Ausführung ohne Elastikelement.

Durch die Anordnung eines Elastikelements verringert sich der Zackengrundradius. Insbesondere weist das Elastikelement eine Kante auf, die sich, im angeordneten Zustand an der Rotorblatthinterkante, vom Zackengrund aus in Richtung einer Kante einer Serration erstreckt. In einem Bereich vom Zackengrund bis zu dem Punkt, an dem diese Elastikelementkante die Kante der Serration erreicht, füllt ein Teil des Elastikelements einen Teil eines Zwischenraums zwischen zwei Serrations, aus. Die Kante des Zwischenraums zwischen zwei der Serrations ist somit die Elastikelementkante. Für die Bestimmung des Winkels wird daher die Elastikelementkante und deren Ausrichtung hinsichtlich der Rotorblatthinterkante herangezogen. Dieser Winkel wird in dieser Ausgestaltung durch das Elastikelement verringert.

In alternativen Ausgestaltungen, in denen beispielsweise die Serrations eine zusätzliche Aussparung, insbesondere des Zackengrunds, aufweisen, wird der Winkel durch das Anordnen eines Elastikelements zwar auch gegenüber dieser zusätzlichen Aussparung verkleinert, allerdings, ist der Winkel insbesondere größer, als in einem Zustand ohne die zusätzliche Aussparung. Im Rahmen einer solchen Ausgestaltung, insbesondere eines Verfahrens, das ein zusätzliches Aussparen der Serrations vor Anordnung des Elastikelements vorsieht, ist das Elastikelement ausgestaltet, den Winkel einer Kante eines Zwischenraums zwischen zwei der Serrations und der Rotorblatthinterkante zu vergrößern.

Gemäß einer weiteren vorteilhaften Ausgestaltung der Erfindung, ist eine Geometrie der Rotorblatthinterkante und insbesondere der Serrations im Zackengrund auf das mindestens eine Elastikelement optimiert.

Beispielsweise weist eine Rotorblatthinterkante und insbesondere Serrations mit optimierter Geometrie mit Bezug auf eine vorige Ausgestaltung an die Form und/oder Funktion des Elastikelements optimierte Aussparungen zur Aufnahme des Elastikelements auf.

In einer anderen Ausführung ist die Geometrie der Rotorblatthinterkante und insbesondere der Serrations derart optimiert, ein vorteilhaftes Anbringen des Elastikelements und/oder eine besonders robuste Befestigung des Elastikelements an der Rotorblatthinterkante und insbesondere den Serrations zu ermöglichen. Dies kann beispielsweise durch eine Anpassung einer lokalen Dicke der Rotorblatthinterkante und insbesondere der Serrations durch beispielsweise die Ausgestaltung von Kerben, lokalen Erhebungen oder einem Aufrauen der Oberfläche der Rotorblatthinterkante und insbesondere der Serrations erreicht werden.

Gemäß einer weiteren vorteilhaften Ausgestaltung der Erfindung, ist eine Bruchdehnung der Serrations geringer als eine Bruchdehnung des mindestens einen Elastikelements und beträgt insbesondere die Bruchdehnung der Serrations zwischen 0,01% und 10% und die Bruchdehnung des mindestens einen Elastikelements zwischen 1,5% und 500%.

Die Bruchdehnung ist ein Kennwert der Werkstoffwissenschaften, der die bleibende Verlängerung einer Zugprobe nach dem Bruch, bezogen auf die Anfangsmesslänge, angibt. Sie charakterisiert die Verformungsfähigkeit bzw. Duktilität eines Werkstoffes und kann, entsprechend dem charakteristischen mechanischen Verhalten der Werkstoffarten, unterschiedlich definiert und auch mit unterschiedlichen Symbolen bzw. Formelzeichen bezeichnet sein.

Es ist eine Erkenntnis der Erfindung, dass Serrations und Elastikelemente bestehend aus Materialien, die obiges Merkmal erfüllen, besonders vorteilhaft sind und besonders zur Schallreduktion und Bestehen der statischen Struktur beitragen.

Gemäß einer weiteren vorteilhaften Ausgestaltung der Erfindung, ist eine Bruchzähigkeit der Serrations geringer ist als eine Bruchzähigkeit des mindestens einen Elastikelements und/oder eine Risszähigkeit der Serrations geringer ist als eine Risszähigkeit des mindestens einen Elastikelements.

Die Bruchzähigkeit oder Risszähigkeit (auch Risswiderstand) beschreibt in der Bruchmechanik den Widerstand eines Materials gegen instabilen Rissfortschritt. Der Werkstoffkennwert ist der kritische Spannungsintensitätsfaktor K_{Ic}, bei dem die Rissausbreitung einsetzt.

Es ist eine Erkenntnis der Erfindung, dass Serrations und Elastikelemente bestehend aus Materialien, die obiges Merkmal erfüllen, besonders vorteilhaft sind und besonders zur Schallreduktion und Bestehen der statischen Struktur beitragen.

Gemäß einer weiteren vorteilhaften Ausgestaltung der Erfindung, ist ein E-Modul der Serrations größer als ein E-Modul des mindestens einen Elastikelements und beträgt das E-Modul der Serrations insbesondere mindestens 5000 MPa.

Der Elastizitätsmodul, auch E-Modul, Zugmodul, Elastizitätskoeffizient, Dehnungsmodul oder Youngscher Modul, ist ein Materialkennwert aus der Werkstofftechnik, der bei linearelastischem Verhalten den proportionalen Zusammenhang zwischen Spannung und Dehnung bei der Verformung eines festen Körpers beschreibt. Die Größenart des Elastizitätsmoduls ist die mechanische Spannung. Der Elastizitätsmodul wächst mit dem Widerstand, den ein Material seiner elastischen Verformung entgegensetzt. Ein Bauteil aus einem Material mit hohem Elastizitätsmodul wie Stahl ist somit steifer als das gleiche Bauteil aus einem Material mit niedrigem Elastizitätsmodul wie Gummi.

Die Serrations weisen insbesondere ein E-Modul von mindestens 5000 MPa bei 20 °C auf.

Es ist eine Erkenntnis der Erfindung, dass Serrations und Elastikelemente bestehend aus Materialien, die obiges Merkmal erfüllen, besonders vorteilhaft sind und besonders zur Schallreduktion und Bestehen der statischen Struktur beitragen.

Gemäß einem zweiten Aspekt der Erfindung wird ein Verfahren zur Verwendung eines Elastikelements zur Verringerung eines Zackengrundradius zwischen mindestens zwei Serrations eines Rotorblatts bereitgestellt, wobei das Rotorblatt eine Rotorblattvorderkante und eine Rotorblatthinterkante aufweist und die mindestens zwei Serrations an der Rotorblatthinterkante angeordnet sind, und das Elastikelement ausgestaltet ist den Zackengrundradius zwischen den mindestens zwei Serrations zu verringern, umfassend die Schritte: Anordnen des Elastikelements an der Rotorblatthinterkante.

Der Schritt des Anordnens umfasst dabei insbesondere ein Befestigen des Elastikelements an der Rotorblatthinterkante, bevorzugt auch das Befestigen des Elastikelements an der Rotorblatthinterkante mit einem oder mehreren Befestigungsmittel. Mögliche Befestigungsmittel wurden bereits bezüglich des ersten Aspekts der Erfindung diskutiert.

Mögliche Ausgestaltungen, Variationen und Ausführungsformen des ersten Aspekts der Erfindung treffen ebenfalls auf den zweiten Aspekt der Erfindung zu, sodass Beschreibungen des ersten Aspekts der Erfindung auch eine Offenbarungsgrundlage für weitere Merkmale und/oder Verfahrensschritte für ein erfindungsgemäßes Verfahren darstellen.

Das Anordnen des Elastikelements an der Rotorblatthinterkante erfolgt insbesondere während eines Herstellungsprozesses des Rotorblatts, oder alternativ bevorzugt als Nachrüstmaßnahme eines Rotorblatts, das vor dem Anordnen des Elastikelements bereits in Betrieb genommen wurde. Es ist ebenfalls denkbar, dass der Schritt des Anordnens im Rahmen der Installation des Rotorblatts an einer Windenergieanlage durchgeführt wird.

Gemäß einem dritten Aspekt der Erfindung wird eine Windenergieanlage bereitgestellt, umfassend mindestens ein Rotorblatt nach dem ersten Aspekt der Erfindung.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration einer Windenergieanlage,
- Fig. 2: eine schematische Darstellung zur Illustration eines Windparks,
- Fig. 3: eine schematische Darstellung zur Illustration eines Zackengrunds,
- Fig. 4: eine schematische Darstellung zur Illustration eines ersten Ausführungsbeispiels der Erfindung,
- Fig. 5: eine schematische Darstellung zur Illustration eines zweiten Ausführungsbeispiels der Erfindung,

- Fig. 6: eine schematische Darstellung zur Illustration eines dritten Ausführungsbeispiels der Erfindung,
- Fig. 7: eine schematische Darstellung zur Illustration eines vierten Ausführungsbeispiels der Erfindung,
- Fig. 8: eine schematische Darstellung zur Illustration eines fünften Ausführungsbeispiels der Erfindung,
- Fig. 9: eine schematische Darstellung zur Illustration eines sechsten Ausführungsbeispiels der Erfindung,

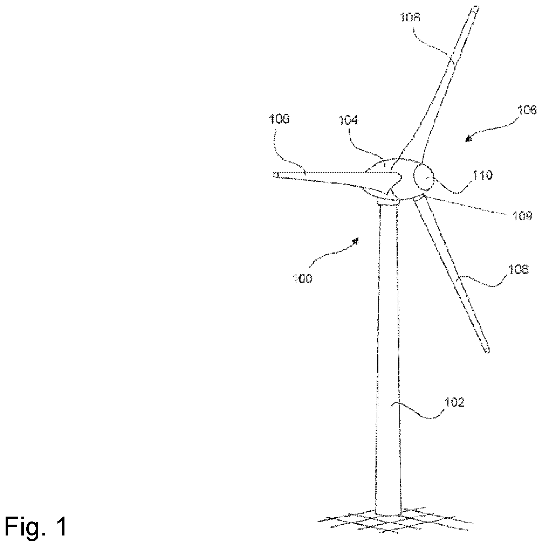

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

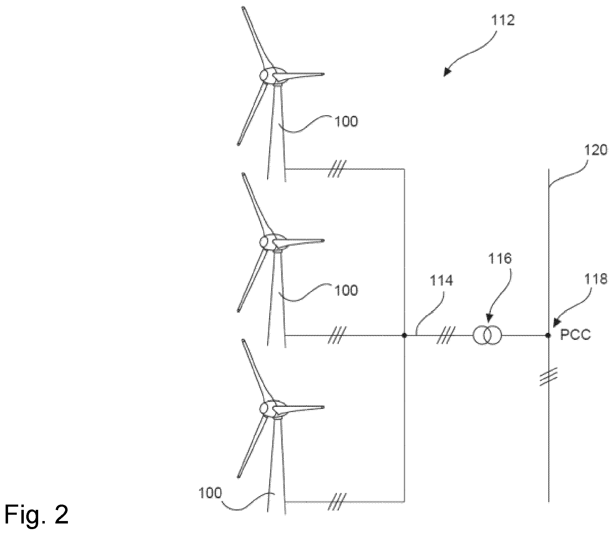

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

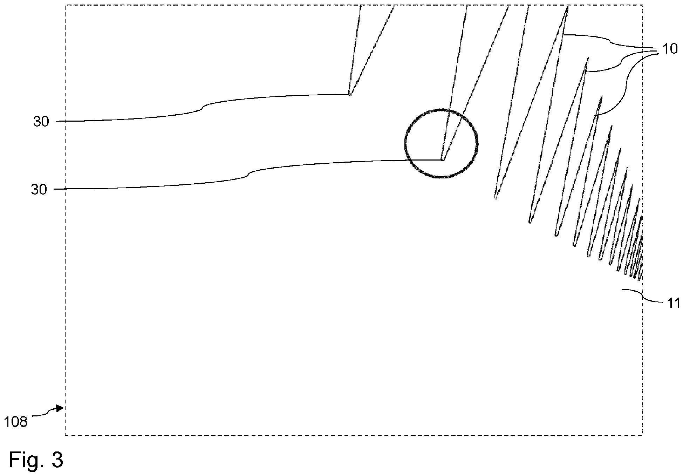

Figur 3 zeigt einen an der Hinterkante eines Rotorblatts 108 angeordneten Hinterkantenkamm 11, umfassend mehrere nebeneinander angeordnete Serrations 10. Zwischen je zwei der Serrations 10 ist eine runde Ausbuchtung 30, ein Zackengrund 30, zu erkennen. Die Ausgestaltung von mehreren Serrations 10 als Hinterkantenkamm 11 vereinfacht den Anordnungsprozess der Serrations 10 an der Rotorblatthinterkante. Die Erfindung betrifft sowohl einzeln angeordnete Serrations 10, als auch mehrere in Form eines Hinterkantenkamms 11 ausgestaltete Serrations 10. Figur 3 zeigt, dass der Zackengrund 30 in Form eines offenen Kreises ausgestaltet ist. Der Radius dieses offenen Kreises ist der Zackengrundradius. In dieser Figur sind die Serrations 10 als Teil eines Hinterkantenkamms 11 gezeigt, der an der Rotorblatthinterkante angeordnet ist. Die folgenden Figuren zeigen Abschnitte der gezackten Kontur der Rotorblatthinterkante eines Rotorblatts 108 umfassend Serrations 10. Die Figuren zeigen somit einen Ausschnitt eines Hinterkantenkamms 11 umfassend Serrations 10 oder einer Rotorblatthinterkante umfassend Serrations 10.

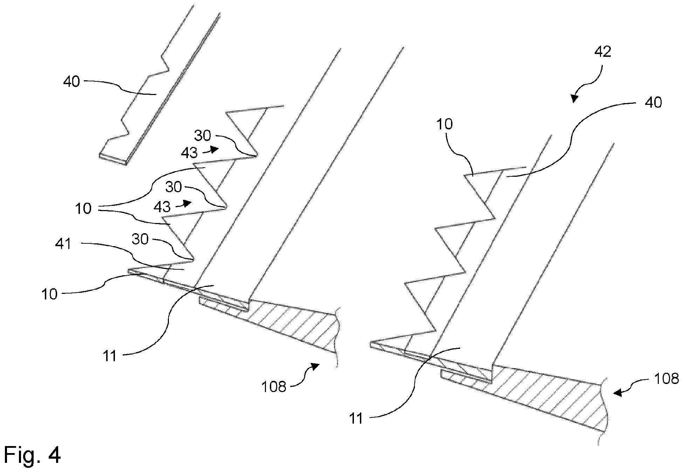

Figur 4 zeigt eine schematische Darstellung zur Illustration eines ersten Ausführungsbeispiels der Erfindung. Es ist ein erfindungsgemäßes Elastikelement 40 gezeigt, sowie ein Hinterkantenkamm 11 umfassend mehrere Serrations 10, wobei der Hinterkantenkamm 11 und damit jede der Serrations 10 eine Aussparung 41 zur Aufnahme des Elastikelements 40 aufweist. Der Hinterkantenkamm 11 weist überdies zwischen je zwei der Serrations 10 eine runde Aussparung 30 als Zackengrund 30 auf. Darüber hinaus zeigt Figur 4 eine kombinierte Anordnung 42, in der das Elastikelement 40 in die Aussparung 41 des Hinterkantenkamms 11 und somit auch in die Aussparungen 41 der Serrations 10 aufgenommen ist, im Weiteren auch als aufgenommener Zustand bezeichnet. Wie in Figur 4 angedeutet, füllt in diesem aufgenommenen Zustand das Elastikelement 40 einen Teil eines Zwischenraums 43 zwischen je zwei der Serrations 10 aus. Des Weiteren reduziert das Elastikelement 40 den Zackengrundradius 30 und reduziert den Winkel zwischen einer Kante eines Zwischenraums 43 zwischen je zwei der Serrations 10 und der Rotorblatthinterkante. Es handelt sich in diesem dargestellten Ausführungsbeispiel auch um eine optimierte Geometrie der Serrations 10, beziehungsweise des Hinterkantenkamms 11, da die Aussparung 41 derart ausgestaltet ist, dass der Hinterkantenkamm 11 in dem aufgenommenen Zustand einen stetigen Dickenverlauf aufweist. Dies begünstigt die Aerodynamik des Hinterkantenkamms 11 und der Serrations 10.

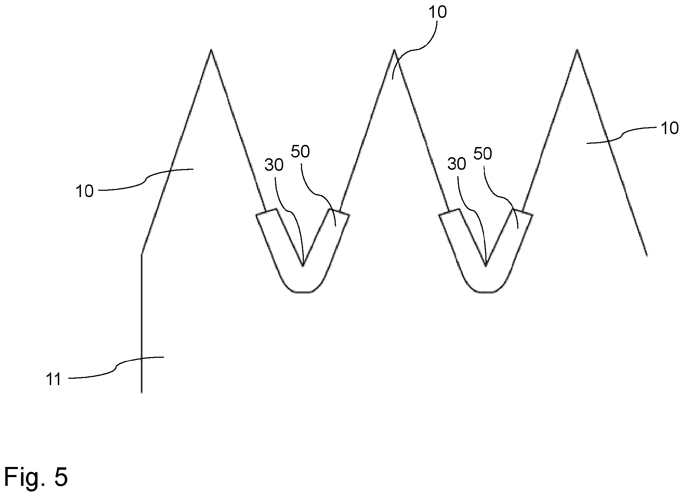

Figur 5 zeigt eine schematische Darstellung zur Illustration eines zweiten Ausführungsbeispiels der Erfindung. Das Elastikelement 50 ist insbesondere derart ausgestaltet, dass es auf die Serrations 10 beziehungsweise einen Hinterkantenkamm 11 auf Saug- oder Druckseite, vorzugsweise auf Saug- und Druckseite angeordnet wird. In diesem Ausführungsbeispiel ist das Elastikelement 50 zum Aufstecken auf den Hinterkantenkamm 11 ausgestaltet. Zu sehen ist die Perspektive von Saug- oder Druckseite. Das Elastikelement 50 ist derart ausgestaltet, dass es sowohl auf Saug- als auch auf Druckseite aufgesteckt wird. Im aufgesteckten Zustand bildet eine gedachte Ebene in der die zwei Serrations 10 liegen, an denen ein Elastikelement 50 aufgesteckt ist, bevorzugt eine Spiegelebene des Elastikelements 50, zu der das Elastikelement 50 im aufgesteckten Zustand symmetrisch ausgestaltet ist. Das Elastikelement 50 reduziert im aufgesteckten Zustand den Zackengrundradius des Zackengrunds 30. Durch das Aufstecken auf die Serrations 10 stellt das Elastikelement 50 eine Erhöhung auf der Oberfläche der Serrations 10 beziehungsweise des Hinterkantenkamms 11 dar. Diese Erhöhung ist bevorzugt ebenfalls vorteilhaft für die Aerodynamik der Serrations 10 ausgestaltet derart, dass das Elastikelement 50 Strömungsumlenkungen zur Abschwächung der Umströmung des Zackengrunds 30 herbeiführt, was in einer reduzierten Schallemission des Rotorblatts 108 an dem der Hinterkantenkamm 11 angeordnet ist resultiert.

Bevorzugt besteht das Elastikelement 50 in diesem Ausführungsbeispiel aus einem Material, dass sich an die Form der Serrations 10 anpasst, ferner bevorzugt derart anpasst, dass sich das Elastikelement 50 nach dem Aufstecken auf die Serrations 10, durch eine Verformung des Elastikelements 50 und daraus resultierenden erhöhten Reibungskräften, die einem Abziehen des Elastikelements 50 von den Serrations 10 entgegenwirken, in einem befestigten Zustand befindet.

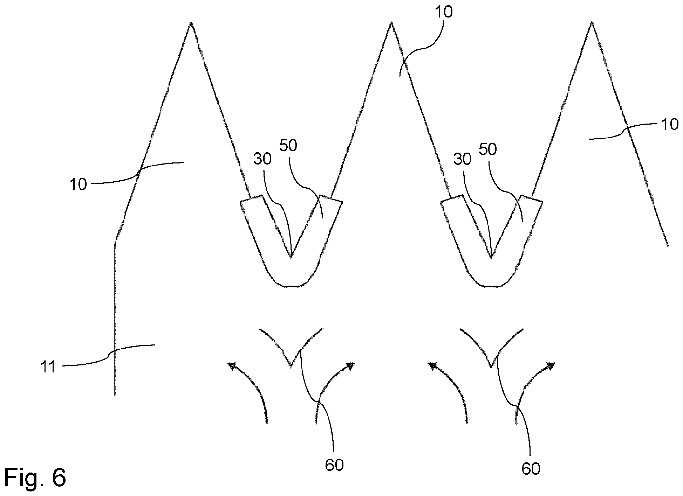

Figur 6 zeigt eine schematische Darstellung zur Illustration eines dritten Ausführungsbeispiels der Erfindung. Dieses dritte Ausführungsbeispiel basiert auf dem obigen zweiten Ausführungsbeispiel. Zusätzlich sind auf dem Hinterkantenkamm 11, beziehungsweise der Rotorblatthinterkante aerodynamische Elemente 60 gezeigt, die eine Strömungsumlenkung in Richtung Serrations 10 herbeiführen. Diese aerodynamischen Elemente 60 verstärken den bereits im Rahmen des zweiten Ausführungsbeispiels beschriebenen Effekt der Strömungsumlenkung. Die gezeigten aerodynamischen Elemente 60 sind bevorzugt Teil des Elastikelements 50, bilden beispielsweise die Spitze einer pfeilförmigen Ausgestaltung des Elastikelements 50. Teil des Elastikelements 50 bedeutet in diesem Fall, dass die aerodynamischen Elemente 60 mit dem Elastikelement 50 direkt verbunden sind und als ein Teil mit dem Elastikelement 50 auf die Rotorblatthinterkante aufgesteckt und entferntwerden.

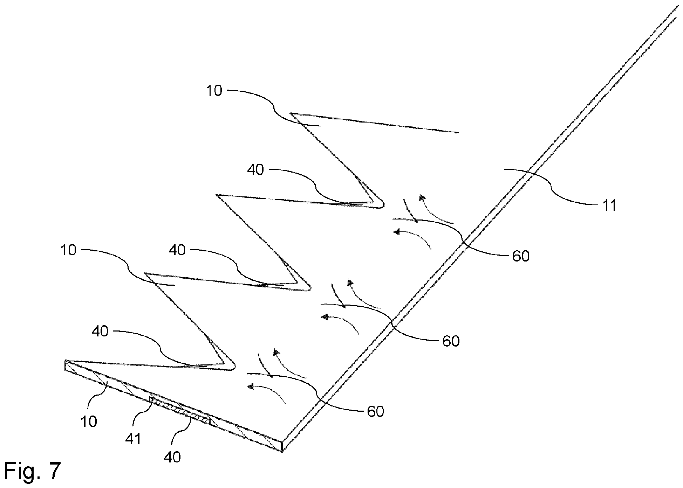

Figur 7 zeigt eine schematische Darstellung zur Illustration eines vierten Ausführungsbeispiels der Erfindung. Dieses vierte Ausführungsbeispiel basiert auf einem ähnlichen Prinzip wie das obige erste Ausführungsbeispiel. Das Elastikelement 40 ist wie gezeigt in Aussparungen 41 in der Rotorblatthinterkante, beziehungsweise dem Hinterkantenkamm 11, beziehungsweise den Serrations 10 aufgenommen. In diesem Ausführungsbeispiel sind die Aussparungen 41 auf der Druckseite angeordnet. Auf der Saugseite sind aerodynamische Elemente 60 gezeigt, die eine Strömungsumlenkung in Richtung Serrations 10 herbeiführen. Diese aerodynamischen Elemente 60 erzeugen den in den vorigen Ausführungsbeispielen bereits diskutierten Effekt der Strömungsablenkung. Wie in obigem dritten Ausführungsbeispiel sind die aerodynamischen Elemente 60 bevorzugt Teil des Elastikelements 40. Das Material des Elastikelements 40 in diesem Ausführungsbeispiel ist demnach bevorzugt derart flexibel, dass die Spitzen des Elastikelements 40, die durch die aerodynamischen Elemente 60 dargestellt sind, im Prozess des Anordnens des Elastikelements 40 auf der Saugseite angeordnet werden können und anschließend das Elastikelement 40 in die Aussparungen 41 aufgenommen wird. Das Elastikelement 40 kann so durch die Serrations 10, beziehungsweise die Rotorblatthinterkante im aufgenommenen Zustand in Dickenrichtung gedehnt sein. Hierdurch wirkt das Elastikelement 40 sowohl auf die Saugseite, durch die Spitzen, als auch auf die Druckseite, in den Aussparungen eine Kraft auf die Serrations 10 beziehungsweise die Rotorblatthinterkante aus, was bevorzugt in einem befestigten Zustand resultiert. Alternativ oder zusätzlich ist eine Befestigung mit Befestigungsmitteln, beispielsweise ein Ankleben oder Einlaminieren auf der Druckseite, möglich.

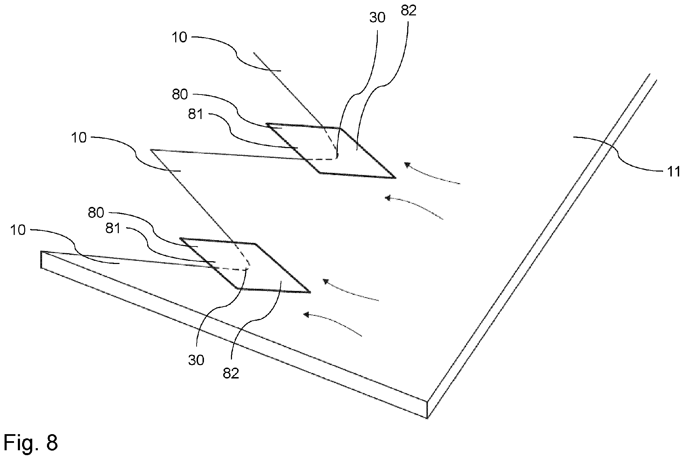

Figur 8 zeigt eine schematische Darstellung zur Illustration eines fünften Ausführungsbeispiels der Erfindung. In diesem Ausführungsbeispiel ist das Elastikelement 80 pfeilspitzenförmig ausgestaltet, sowohl in Rotorblattprofiltiefenrichtung in einem sich von der Rotorblatthinterkante erstreckenden Teil 81, als auch entgegen Rotorblattprofiltiefenrichtung in einem der Rotorblattvorderkante zugewandten Teil 82. Das Elastikelement 80 ist hier gezeigt auf der Saugseite des Rotorblatts 108 angeordnet. Eine alternative oder zusätzliche Anordnung an der Druckseite ist ebenfalls denkbar. Der pfeilförmige zugewandte Teil 82 des Elastikelements 80 in Richtung Rotorblattvorderkante wurde mit dem resultierenden Effekt der Strömungsablenkung bereits ausführlich erläutert. Der sich von der Rotorblatthinterkante in Rotorblattprofiltiefenrichtung erstreckende Teil 81 des Elastikelements überdeckt den Zackengrund 30, sodass der effektive Zackengrundradius auf null reduziert ist. Die spitz zulaufende Form des Elastikelements 80 wirkt sich zusätzlich positiv auf die Schallemission des Rotorblatts 108 aus.

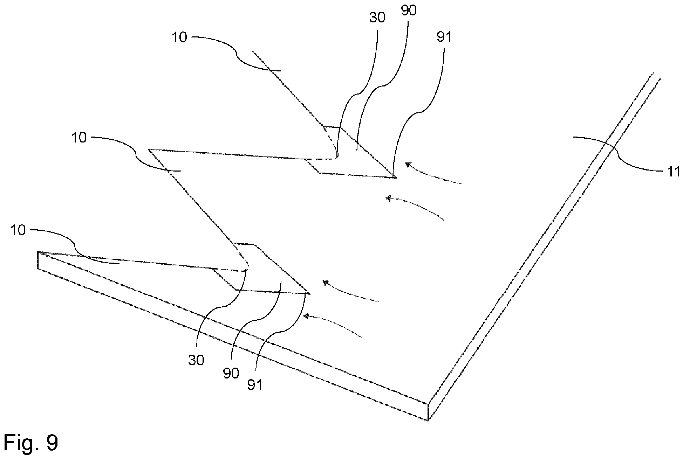

Figur 9 zeigt eine schematische Darstellung zur Illustration eines sechsten Ausführungsbeispiels der Erfindung. Dieses sechste Ausführungsbeispiel basiert auf dem obigen zweiten Ausführungsbeispiel. Die im zweiten Ausführungsbeispiel durch die aerodynamischen Elemente 60 angedeuteten Spitzen 91 des Elastikelements 90 sind in hier in Figur 9 als Teil des Elastikelements 90 gezeigt. Das Elastikelement 90 weist in diesem Ausführungsbeispiel ebenfalls die bereits erläuterten positiven Effekte auf die Reduzierung der Schallemission des Rotorblatts 108 auf. Das Elastikelement 90 ist in diesem Ausführungsbeispiel auf die Rotorblatthinterkante aufgesteckt und umfasst einen zu dem gezeigten Teil des Elastikelements 90 symmetrischen weiteren Teil, der auf der Druckseite des Rotorblatts 108 angeordnet ist.

### Bezugszeichen:

- 10: Serrations
- 11: Hinterkantenkamm
- 30: runde Ausbuchtung, Zackengrund
- 40, 50, 80, 90: Elastikelement
- 41: Aussparung
- 42: kombinierte Anordnung
- 43: Zwischenraum
- 60: aerodynamisches Element
- 81: erstreckender Teil
- 82: zugewandter Teil
- 91: Spitzen
- 100: Windenergieanlage
- 102: Turm
- 104: Gondel
- 106: Rotor
- 108: Rotorblatt
- 109: Rotorblattwurzel
- 110: Spinner
- 112: Windpark
- 114: Parknetz
- 116: Transformator
- 118: Einspeisepunkt
- 120: Versorgungsnetz

## Patentansprüche

1. Rotorblatt (108) für eine Windenergieanlage (100), wobei das Rotorblatt (108) von einer Rotorblattwurzel bis zu einer Rotorblattspitze in Rotorblattlängsrichtung eine Rotorblattlänge aufweist, von einer Rotorblattvorderkante zu einer Rotorblatthinterkante in Rotorblattprofiltiefenrichtung eine Rotorblattprofiltiefe aufweist, eine sich zwischen Rotorblattvorderkante und Rotorblatthinterkante aufspannende Saugseite und eine sich zwischen Rotorblattvorderkante und Rotorblatthinterkante aufspannende Druckseite aufweist, eine sich zwischen der Saugseite und der Druckseite in Rotorblattdickenrichtung aufspannende Rotorblattdicke aufweist und mehrere an der Rotorblatthinterkante angeordnete Serrations (10) aufweist, wobei die Rotorblatthinterkante zwischen je zwei der mehreren Serrations (10) einen ersten Zackengrundradius aufweist, wobei das Rotorblatt (108) ferner umfasst
mindestens ein Elastikelement (40, 50, 80, 90),
wobei
die mehreren Serrations (10) aus einem ersten Material, insbesondere GFK, bestehen,
das mindestens eine Elastikelement (40, 50, 80, 90) aus einem zweiten Material besteht,
das mindestens eine Elastikelement (40, 50, 80, 90) ausgestaltet ist den ersten Zackengrundradius zwischen mindestens zwei der mehreren Serrations (10) auf einen zweiten Zackengrundradius zu verringern und
eine Steifigkeit des zweiten Materials geringer ist als eine Steifigkeit des ersten Materials.

2. Rotorblatt (108) nach Anspruch 1, wobei die Steifigkeit des zweiten Materials höchstens 60 % der Steifigkeit des ersten Materials beträgt.

3. Rotorblatt (108) nach einem der vorstehenden Ansprüche, wobei der zweite Zackengrundradius maximal 80% des ersten Zackengrundradius und insbesondere höchstens 4 mm beträgt.

4. Rotorblatt (108) nach einem der vorstehenden Ansprüche, wobei das mindestens eine Elastikelement (40, 50, 80, 90) an der Saugseite und/oder der Druckseite an mindestens zwei der Serrations (10) angebracht ist und wobei das mindestens eine Elastikelement (40, 50, 80, 90) insbesondere zumindest einen Teil von mindestens zwei der mehreren Serrations (10) überlagert.

5. Rotorblatt (108) nach einem der vorstehenden Ansprüche, wobei das mindestens eine Elastikelement (40, 50, 80, 90) zumindest einen Teil der Rotorblatthinterkante überlagert, wobei das mindestens eine Elastikelement (40, 50, 80, 90) insbesondere pfeilförmig ausgestaltet ist, derart, dass eine Pfeilspitze der Pfeilform des mindestens einen Elastikelements (40, 50, 80, 90) in Rotorblattprofiltiefenrichtung in Richtung Rotorblattvorderkante zeigt.

6. Rotorblatt (108) nach einem der vorstehenden Ansprüche, wobei das mindestens eine Elastikelement (80) mindestens einen sich parallel zur Rotorblattprofiltiefenrichtung von der Rotorblatthinterkante aus erstreckenden Abschnitt (81) umfasst, der zwischen mindestens zwei der mehreren Serrations (10) angeordnet ist, wobei der mindestens eine Abschnitt (81) insbesondere eine Ausdehnung in Rotorblattdickenrichtung aufweist, die größer ist als eine Ausdehnung der Serrations (10) in Rotorblattdickenrichtung.

7. Rotorblatt (108) nach Anspruch 6, wobei der mindestens eine Abschnitt (81) eine Länge als maximale Ausdehnung von der Rotorblatthinterkante in Rotorblattprofiltiefenrichtung aufweist, die geringer ist als eine Länge als maximale Ausdehnung der Serrations (10) von der Rotorblatthinterkante in Rotorblattprofiltiefenrichtung.

8. Rotorblatt (108) nach Anspruch 6 oder 7, wobei der mindestens eine Abschnitt (81) im Wesentlichen orthogonal zur Rotorblattprofiltiefenrichtung einen Querschnitt aufweist und der Querschnitt mindestens ein lokales Minimum einer Ausdehnung des mindestens einen Abschnitts (81) in Rotorblattdickenrichtung aufweist, wobei die Ausdehnung des mindestens einen Abschnitts in Rotorblattdickenrichtung in dem Querschnitt beiderseitig des lokalen Minimums einen größeren Wert aufweist, und/oder
wobei der mindestens eine Abschnitt (81) spitzer oder stumpfer ausgestaltet ist als die Serrations (10).

9. Rotorblatt (108) nach einem der Ansprüche 1 bis 3, wobei das mindestens eine Elastikelement (40) in die Rotorblatthinterkante und insbesondere in die Serrations (10) eingelegt ist, derart, dass die Rotorblattdicke der Rotorblatthinterkante in einem Zustand umfassend das Elastikelement (40) gleich der Rotorblattdicke der Rotorblatthinterkante in einem Zustand ohne das mindestens eine Elastikelement (40) ist.

10. Rotorblatt (108) nach einem der vorstehenden Ansprüche, wobei das mindestens eine Elastikelement (40, 50, 80, 90) ausgestaltet ist, einen Winkel zwischen einer Kante eines Zwischenraums (43) zwischen zwei der Serrations (10) und der Rotorblatthinterkante zu verringern und/oder
wobei eine Geometrie der Rotorblatthinterkante und insbesondere der Serrations (10) im Zackengrund (30) auf das mindestens eine Elastikelement (40, 50, 80, 90) optimiert ist.

11. Rotorblatt (108) nach einem der vorstehenden Ansprüche, wobei eine Bruchdehnung der Serrations (10) geringer ist als eine Bruchdehnung des mindestens einen Elastikelements (40, 50, 80, 90) und insbesondere
die Bruchdehnung der Serrations (10) zwischen 0,01% und 10% beträgt und
die Bruchdehnung des mindestens einen Elastikelements (40, 50, 80, 90) zwischen 1,5% und 500% beträgt.

12. Rotorblatt (108) nach einem der vorstehenden Ansprüche, wobei
eine Bruchzähigkeit der Serrations (10) geringer ist als eine Bruchzähigkeit des mindestens einen Elastikelements (40, 50, 80, 90) und/oder
eine Risszähigkeit der Serrations (10) geringer ist als eine Risszähigkeit des mindestens einen Elastikelements (40, 50, 80, 90).

13. Rotorblatt (108) nach einem der vorstehenden Ansprüche, wobei ein E-Modul der Serrations (10) größer ist als ein E-Modul des mindestens einen Elastikelements (40, 50, 80, 90) und das E-Modul der Serrations (10) insbesondere mindestens 5000 MPa beträgt.

14. Verfahren zur Verwendung eines Elastikelements (40, 50, 80, 90) zur Verringerung eines Zackengrundradius zwischen mindestens zwei Serrations (10) eines Rotorblatts (108), wobei das Rotorblatt (108) eine Rotorblattvorderkante und eine Rotorblatthinterkante aufweist und die mindestens zwei Serrations (10) an der Rotorblatthinterkante angeordnet sind, und das Elastikelement (40, 50, 80, 90) ausgestaltet ist den Zackengrundradius zwischen den mindestens zwei Serrations (10) zu verringern, umfassend den Schritt
Anordnen des Elastikelements (40, 50, 80, 90) an der Rotorblatthinterkante.

15. Windenergieanlage (100) umfassend mindestens ein Rotorblatt (108) nach einem der Ansprüche 1 bis 13.
